# EUROPEAN PATENT APPLICATION

(11) **EP 1 997 390 A1**
(43) Date of publication of application: **03.12.2008**
(21) Application number: 07108910.6
(22) Date of filing: 25.05.2007
(51) Int. Cl.: A23L 1/19, A23C 13/16

(54) **Spoonable water-continuous acidified food product**

(71) Applicant: Unilever N.V., 3013 AL Rotterdam (NL); Unilever PLC, London Greater London EC4P 4BQ (GB)
(72) Inventor: Adamcikova, Maria, c/o Unilever CR spol s.r.o., 18621, Prague 8 (CZ)
(74) Representative: Joppe, Hermina Laura Petronella

(57) **Abstract**

A process is provided for preparing a spoonable non-dairy cream without gelatine that is hot-filled and that shows no cracking of the surface of the cream upon storage.

## Description

### Field of the invention

The invention relates to a process for preparing a spoonable acidified food product without gelatine that is hot-filled suitable for use as an acid cream alternative which cream comprises a fat phase consisting at least partly of vegetable oil or marine oil, said cream further comprising biopolymer, protein and optionally further ingredients. The invention further relates to the cream obtainable by this process.

### Background to the invention

Non-dairy creams are emulsions of a water continuous phase and a dispersed fat phase, which is essentially based on vegetable fat. Non-dairy creams are known in several physical forms such as whippable creams, pourable cooking cream, and spoonable cream such as creme fraiche and sour cream.

Non-dairy creams have been developed with the aim to replace the original dairy cream by a more healthy, and often less costly alternative. Fats rich in polyunsaturated fatty acids are generally thought to contribute to an essential part of a healthy diet. Dairy products which usually show a high butter fat content are consumed at a lower rate since several decades whereby their consumption is often "saved" for indulgence occasions. Therefore there is a long standing desire for non-dairy creams to replace the dairy products whippable cream, creme fraiche, cooking creams and the like.

Creams like creme fraiche and sour cream are acidified. The acidification can be done by chemical acidification but is often accomplished by fermentation of a special culture. The advantage of using such a fermenting culture is that the fermentation process in addition to the acidification provides a pleasant taste that is appreciated by consumers.
During the process of acidified creams the emulsions after fermentation may be either cold filled or hot filled in the package. Hot filling is preferred as this gives the creams a longer shelf life.

For good stability and good spoonable rheology hot filled products contain gelatin. However for vegetarians gelatin is not acceptable and some consumer do not like gelatin for reasons of fear for mad cow disease. Pectin is often used as a replacer for gelatin.

However applicants have found that when spoonable fermented creams without gelatin are hot filled and sealed while hot, the top surface of cream becomes cracked and the product looses attractiveness for consumers. It is believed that due to the hot-filling process water-vapor condenses on the seal and forms water droplets that fall back on to the surface of the product thereby forming cracks.

The aim of the present invention is to provide an acidified water-continuous product with spoonable rheology and no gelatin that when it is hot filled and sealed does not form cracks on the surface when subsequently cooled.

Spoonable acidified low-fat vegetable fat-based cream alternatives have been described in EP-A-1494544 which discloses creamy, cultured vegetable fat-based cream alternatives comprising 5 to 35 wt% fat, from 0.05 to 15 wt% protein, 0.01 to 3 wt% biopolymer, said cream product having a pH value between 4.0 and 5.8 and the cream alternative having a spoonable texture and good taste and does not show synereris. The cream alternative is hot filled and may contain pectin.

The resulting products were found to have the desired spoonable rheology. However they show cracks on the surface of the product after cooling down, e.g. after 1 week after storage. These cracks reduce the attractiveness of the products for consumers and is therefore less desired.

It is therefore an object of the current invention to provide a spoonable soured low-fat vegetable fat-based cream alternative, which is hot filled and therefore stable upon storage, but doesn't show cracks after cooling down.

### Summary of the invention

It has surprisingly been found that a cream with less than 0.1 wt% of pectin does not show cracks after 1 week of storage but still has an acceptable rheology.

Therefore the invention relates to a process for the preparation of a spoonable, acidified non-dairy cream comprising from 3 to 40 wt% fat, from 0 to 0.1 wt% of pectin said cream product having a pH value between 4.0 and 5.8 wherein the cream is filled in containers and sealed while having a temperature of 60°C or higher.

In a further aspect the invention relates to a product obtainable by this process.

### Detailed description of the invention

The invention relates to spoonable creams. Spoonable creams display at 5 °C the following characteristics:
(a) a yield value of more than 50 Pa extrapolated from shear rates between 100 and 300 s⁻¹ (Bingham)
(b) a Bingham viscosity of less than 500 mPa.s between shear rates of 100 and 300 s⁻¹.

EP-B-483896 discloses spoonable creams and is herewith incorporated by reference. Yield stress and Bingham viscosities are determined utilising the Carrimed Rheometer. Measurements are performed at 5°C using 4°-cone and plate geometry. The shear stress was increased from zero at a rate of 60 Pa/min and shear rates were measured until values in excess of 600 s⁻¹ were achieved. The measurement was then terminated. A graph of shear stress vs. shear rate was plotted and a straight line fitted to the curve between the shear rates of 100 to 300 s⁻¹. The slope of this line is the Bingham viscosity. The yield stress is determined by extrapolation of this line back to zero shear rate.

Suitable spoonable non-dairy creams display a firmness, measured as Stevens value, of from 10 to 500 g, preferably from 100 to 250 g. Stevens value can be measured with an LFRA-Stevens texture analyzer, using a cylindrical measuring rod having a diameter of 2.5 cm, a height of 3.5 cm and a weight of 20.9 g and 0.4 mm penetration depth.

Non-dairy creams are emulsions of a water continuous phase and a dispersed fat phase, which is essentially based on vegetable fat on or blends of vegetable fat and marine oil. The presence of a small amount of dairy fat is tolerable e.g. when derived from ingredients that are part of the cream such as milk powders. Preferably, the amount of dairy fat is below 5wt% on total fat, more preferably below 2 wt%, and most preferably below 1 wt% on total fat.

In the description and claims where weight% is used this is weight% on total product weight unless otherwise is indicated.

In the description and claims the terms "oil" and "fat" are used interchangeably.

For good spoonable rheology the non-diary creams comprises 0.01 to 3 wt% biopolymer. The biopolymer is preferably a combination of a starch and a thickener. Suitable thickener are selected from the group consisting of carrageenan, alginate, tara gum, guar gum, locust bean gum, methylcellulose, xanthan gum or a combination thereof. For the purpose of this invention pectin is not included in the definition of the biopolymer. Suitable starches are starches obtained from the group consisting of wheat, potato, rice, maize, tapioca, waxy rice or waxy maize.

A preferred combination is about 1 to 2 wt% of starch and about 0.05 to 0.25 wt% of thickener. The creams according to the invention do not comprise gelatine.

Preferably the creams comprise from 0.05 to 15 wt% protein. Furthermore proteins (other than impurities contained in the biopolymer sources) are not included in the definition of biopolymer.

Generally the dry matter content of spoonable creams is from 15wt% to 50 wt%, more preferably from 20 to 40 wt%, most preferred from 25 to 35 wt% on total product weight.

To obtain a cream with the desired dispersed fat phase properties such as particle size, it is preferred that one or more homogenisation steps are included in the process.
In a preferred process the obtained mixture is homogenised at a pressure of between 100 and 400 bar, preferably at a temperature above the melting point of the fat. Preferably the homogenisation takes place at a temperature of 50°C or higher, more preferably at a temperature of 60°C or higher.

Most preferably two homogenisation steps are included in the process. Preferably homogenisation takes place before and after the mixing in of biopolymer.

Heating as may take place in order to ensure pasteurisation or sterilisation of the product, or to achieve protein denaturation. Preferably heating is carried out to a temperature above 60 °C, preferably from 70 to 100 °C.

The filling and sealing of the cream according to the invention is done while the cream is still hot, i.e. above 60°C. This gives a longer shelf-life of the product. Preferably the cream is filled and sealed while it has a temperature of from 70 to 110 °C, more preferably from 80 to 90°C.

Acidification may take place by microbiological or chemical acidification or a combination of both. In case the products are acidified microbiologically it is preferred that the cultures are made inactive after the acidification.

In a further aspect the invention relates to a spoonable soured non-dairy cream obtainable by the process according to the invention.

In another embodiment the invention regards a hot filled spoonable soured non-dairy cream comprising a dispersed oil phase and a continuous aqueous phase said cream comprising from 5 to 40 wt% fat, said fat being either a vegetable oil or marine oil or a combination thereof; from 0.05 to 15 wt% protein, 0.01 to 3 wt% biopolymer, and no gelatine said cream having a pH value between 4.0 and 5.8, wherein the cream comprises pectin in an amount of less than 0.1 wt%.

Preferably the cream according to the invention comprises less than 0.05 wt% pectin and more preferably no pectin.

The concentration of biopolymer in the non-dairy cream according to the invention is from 0.01 to 3 wt%, preferably from 0.1 to 1.5 wt%. It will be appreciated that each individual biopolymer will have its own optimal concentration, which may depend on other characteristics of the food product such as the protein source, pH and salt content. The source and amount of biopolymer should be chosen such that the cream has a spoonable rheology as defined above.

Good spoonable creams have been obtained with a combination of a starch and a thickener.

Suitable thickener are selected from the group consisting of carrageenan, alginate, tara gum, guar gum, locust bean gum, methylcellulose, xanthan gum or a combination thereof. For the purpose of this invention pectin is not included in the definition of the biopolymer.

Suitable starches are starches obtained from the group consisting of wheat, potato, rice, maize, tapioca, waxy rice or waxy maize.

A preferred combination is from 1 to 2 wt% of starch and about 0.05 to 0.25 wt% of thickener. The creams according to the invention do not comprise gelatine.

For the purpose of the invention protein is not included in the definition of biopolymer. The protein is preferably selected from the group comprising milk protein, soy protein, pea protein or combinations thereof. The use of milk protein as at least part of the protein is highly preferred because of the positive effect of milk protein on the taste and flavour of the final product.

Suitable sources of milk protein are for example selected from the group comprising milk, skimmed milk or skim milk powder, butter milk or butter milk powder, butter serum powder, whey or whey powder, whey protein concentrate, whey protein isolate, caseinate or a combination thereof. The most preferred protein is protein originating from buttermilk because of its superb taste and flavour contribution.

The amount of protein is from 0.05 to 15 wt%, preferably from 2 to 10 wt%, more preferred from 2 to 6 wt%. In general the lowest possible protein concentration is most advantageous because of cost reasons.

The products according to the invention comprise from 3 to 40 wt% fat. Preferred products comprise 12 to 25 wt%, more preferred from 15 to 20 wt% fat.

The fat is either a vegetable oil or marine oil or a combination thereof. The fat is essentially free of dairy fat which implies that the level of dairy fat on total fat is preferably below 10 wt%, more preferred below 5 wt%, even more preferred below 1 wt%.

The fat is preferably selected from the group comprising coconut oil, palm oil, olive oil, palm kernel oil, soybean oil, rapeseed oil, sunflower oil, safflower oil, or fully or partially hardened fractions thereof.

Optionally the fat is an interesterified fat blend. In a further preferred embodiment, the total amount of saturated fatty acid components in the fat is less than 45 wt%, based on the total amount of fatty acid components, and further preferred less than about 30 wt%.

Most preferably the solids content of the fat or fat blend that forms the dispersed fat phase is from 5 to 95% at 10°C, from 1 to 50% at 20 °C and from 0 to 10% at 35 °C. More preferred the solids content is from 25 to 75% at 10 °C, from 7.5 to 35% at 20 °C and from 0 to 5% at 35°C. Most preferred the solids content is from 60 to 75% at 10 °C, from 10 to 35% at 20 °C and from 0 to 5% at 35 °C.

Optionally the products according to the invention comprise emulsifier. For the purpose of the invention the term emulsifier does not encompass protein. However very high amount of emulsifier are preferably avoided as this could lead to a change in texture in terms of the contribution of the fat droplets to consistency of the product. Preferably the amount of emulsifier is below 1 wt%, more preferred below 0.5 wt%.

Suitable emulsifiers are for example monoglycerides (saturated or unsaturated), diglycerides, phospholipids such as lecithin.

Optionally, usual additives for emulsions such as salt, herbs, spices, flavours, colouring matter, preservatives, sweetener and the like may be added.

Normally, for use as a cream alternative at least some salt may optionally be present. The amount of salt may vary depending on the consumer preference in a specific country, but amounts up to 1.5 wt% are generally recommended. The preferred salt is sodium chloride.

The products have a pH of about 4.0 to 5.8, preferably between 4.2 and 5.2, and most preferred between 4.2 and 4.6. Acidification of the starting ingredients to this pH can be obtained by any suitable method such as microbial acidification or chemical acidification for example using lactic acid, glucono deltalactone or another acidifying agent. The pH can be further adjusted by the use of a base such as sodium hydroxide.

The invention is illustrated in the following non-limiting example.

### Example

### General

### Method to determine syneresis

A sample of 200 g in tub was taken. Half of the product was taken out with a spoon. The product is put to a temperature of 25 °C for 4 hours and then for 20 hours at 5 °C. The water is removed and by weighing the sample both before and after water removal, the amount of syneresis is determined.

Products were prepared according to table 1:

| | |
|---|---|
| Hardened coconut oil | 7.4 |
| Dry fractionated palm olein (IV 55) | 7.4 |
| Skimmed milk powder | 2 |
| Butter milk powder | 6.5 |
| Tapioca starch (Farinex VA70T) | 1.5 |
| Pectin HM | 0.1 |
| Guar gum | 0.12 |
| Lactic acid | 0.0375 |
| Probat M7 (Danisco mesophilic lactic acid culture) | 0.03 |
| Beta carotene (30% in sunflower oil) | 0.0001 |
| Water | balance |

### Process

Water phase and fat phase ingredients except for guar gum and acids were mixed at about 60 °C. After mixing the composition was pasteurized at 85°C for 10 minutes, and cooled down to 44°C, after which homogenisation at 200 bar took place. To the homogenized composition acid was added, until a pH of about 4.8 was reached. Subsequently guar gum was added, followed by heating the mixture to 85 °C. The obtained product was homogenized at 300 bar, and subsequently heated to a temperature of 75°C for filling in small containers. After the filling the container are sealed and the product was cooled down to below 10°C and stored at chill temperature.

### Result

The obtained product showed no cracks after storage for 1 week while the spoonable rheology was satisfactory.

### Example 2 and 3

Creams were made with the same ingredients as in table 1 except for that 0.15 wt% and 0.2 wt% pectin was added in stead of 0.1 wt% and after storage of 1 week at 5°C cracks were visible on the surface of the cream.

## Claims

1. Process for the preparation of a spoonable, acidified non-dairy cream comprising from 3 to 40 wt% fat, from 0.05 to 15 wt% protein, 0.01 to 3 wt% biopolymer, comprising pectin in an amount of from 0 to 0.1 wt%, and no gelatine said cream product having a pH value between 4.0 and 5.8 wherein the cream has a temperature above 60°C when filled and sealed.

2. Process according to the previous claims wherein the process comprises the steps of
(a) preparation of an aqueous premix comprising at least protein and preferably fat
(b) heating the mixture obtained in step (a)
(c) acidification to a pH from 4.0 to 5.8
(d) mixing in of a biopolymer
(e) heating the mixture obtained in step (d)
(f) filling and sealing

3. Process according to claim 2 wherein after step (a) or (b) the obtained mixture is homogenised at a pressure of between 100 and 400 bar, preferably at a temperature above the melting point of the fat.

4. Process according to any of claims 2 or 3 wherein the mixture of step (e) is homogenised before step (f), preferably at a pressure of between 100 and 400 bar, and preferably at a temperature above the melting point of the fat.

5. Process according to any of claims 2 to 4 wherein biopolymer is selected from the group comprising carrageenan, tara gum, guar gum, locust bean gum, alginate, methylcellulose, xanthan gum, starch or a combination thereof.

6. Non-dairy cream obtainable by the process according to any of claims 1-5.

7. Spoonable acidified hot-filled non-dairy cream comprising a dispersed oil phase and a continuous aqueous phase said cream comprising from 3 to 40 wt% fat, said fat being either a vegetable oil or marine oil or a combination thereof; from 0.05 to 15 wt% protein; 0.01 to 3 wt% biopolymer; pectin in an amount of 0 to 0.1 wt% and no gelatine, said cream having a pH value between 4.0 and 5.8.

8. Spoonable cream according to any of claim 6 to 7 wherein the biopolymer is a combination of starch and thickener.

9. Spoonable cream according to claim 8 wherein the amount of starch is from 1 to 2 wt% and the amount of thickener is from 0.05 to 0.25 wt%.
